# EUROPÄISCHE PATENTSCHRIFT

(11) **EP 2 051 875 B1**
(45) Veröffentlichungstag und Bekanntmachung des Hinweises auf die Patenterteilung: **05.01.2011**
(21) Anmeldenummer: 07765700.5
(22) Anmeldetag: 28.06.2007
(51) Int. Cl.: B60K 31/00

(54) **VORRICHTUNG ZUR ERFASSUNG EINES BEWEGTEN OBJEKTES**
DEVICE FOR DETECTING A MOVING OBJECT
DISPOSITIF POUR LA SAISIE D'UN OBJET EN DÉPLACEMENT

(30) Priorität: 11.08.2006 DE 102006037591
(43) Veröffentlichungstag der Anmeldung: 29.04.2009
(73) Patentinhaber: Robert Bosch GmbH, 70442 Stuttgart (DE)
(72) Erfinder: LEE, Wei-Chia, 71229 Leonberg (DE)
(86) Internationale Anmeldenummer: PCT/EP2007/056474
(87) Internationale Veröffentlichungsnummer: WO 2008/017542

(56) Entgegenhaltungen:
- EP-A- 1 607 264
- EP-A- 1 612 082
- EP-A1- 1 571 638
- EP-A2- 0 443 185
- DE-A1- 19 843 395

## Beschreibung

### Stand der Technik

Die Erfindung betrifft eine Vorrichtung mit zumindest einem Ultraschall-Sensor zur Erfassung eines bewegten Objektes, insbesondere eines sich nähernden Fahrzeuges, und mit einer Steuereinheit zur Bestimmung des Abstands und/oder der relativen Geschwindigkeit des Objektes als Messwert einerseits und der hinsichtlich der Messwerterfassung relevanten Umfeldbedingungen andererseits sowie mit einer Ausgabeeinheit zur bedarfsweisen Auslösung eines Signals aufgrund der so ermittelten Messwerte.

Eine gattungsgemäße, für Kraftfahrzeuge bestimmte Vorrichtung ist in der Praxis unter der Bezeichnung "Spurwechselassistent" bekannt Der Spurwechselassistent ist eine Einrichtung zur Bestimmung eines Gefahrenwertes anhand von Ortungsdaten, insbesondere des Abstands und der relativen Geschwindigkeit der von dem Spurwechsel betroffenen Fahrzeuge.

Spurwechselvorgänge bergen insbesondere auf Autobahnen und mehrspurigen Schnellstrassen ein hohes Unfallrisiko. Die Ursache liegt zumeist darin, dass der Fahrer eines Fahrzeugs bei einem Spurwechsel andere Verkehrsteilnehmer, die sich auf der Nachbarspur von hinten annähern oder sich im toten Winkel befinden, übersieht oder deren Abstand und/oder Geschwindigkeit falsch einschätzt.

Ein Spurwechselassistent unterstützt den Fahrer beim Wechsel der Fahrspur, beispielsweise bei Überhol- und Einschermanövern. Eine wesentliche Funktion des Spurwechselassistenten besteht demnach darin, den Fahrer über Fahrzeuge zu informieren bzw. ihn vor Fahrzeugen zu warnen, die sich schnell von hinten annähern oder sich im toten Winkel befinden. Dies trägt wesentlich zur Vermeidung von Kollisionsunfällen bei.

Zu dem Spurwechselassistenten gehört mindestens ein Ortungsgerät, beispielsweise ein Radar-, Lidar- oder Ultraschallsensor, der den rückwärtigen Bereich neben und hinter dem eigenen Fahrzeug überwacht und Informationen über die vom Spurwechsel betroffenen Fahrzeuge liefert. Die betroffenen Fahrzeuge sind insbesondere Fahrzeuge im toten Winkel sowie nachfolgende Fahrzeuge auf der Nebenspur, zumindest das unmittelbar nachfolgende Fahrzeug.

Vorzugsweise werden auch Fahrzeuge berücksichtigt, die sich auf annähernd gleicher Höhe mit dem eigenen Fahrzeug befinden und somit zwar nicht in dem toten Winkel liegen aber dennoch vom Fahrer leicht übersehen werden können. Die relevanten Ortungsdaten sind, zumindest in Bezug auf nachfolgende Fahrzeuge, die Abstände dieser Fahrzeuge und deren zeitliche Ableitungen. Besonders relevant sind naturgemäß der Abstand und die Relativgeschwindigkeit des unmittelbar nachfolgenden Fahrzeugs.

Anhand der Ortungsdaten wird der Gefahrenwert bestimmt, der das Risikopotential einer Kollision angibt. Dabei ist generell auch die Absolutgeschwindigkeit des eigenen Fahrzeugs zu berücksichtigen, da bei höheren Geschwindigkeiten ein größerer Sicherheitsabstand einzuhalten ist.

Wenn der Fahrer etwa durch Setzen des Blinkers oder durch ein Lenkmanöver die Absicht zu einem Spurwechsel zu erkennen gibt, erzeugt der Spurwechselassistent in Abhängigkeit von dem ermittelten Gefahrenwert ein Warnsignal, beispielsweise in Form eines akustischen Signals oder in der Form einer optischen Anzeige auf dem Armaturenbrett oder im linken Außenspiegel.

Im Fall eines mehrwertigen Gefahrenwertes wird das Warnsignal beispielsweise dann ausgegeben, wenn der Gefahrenwert einen bestimmten Schwellenwert überschreitet, oder das Warnsignal gibt unmittelbar den Gefahrenwert an, etwa durch variable Lautstärke des akustischen Signals oder in der Form einer Balkenanzeige. Wahlweise kann der Gefahrenwert auch dazu benutzt werden, dass der Spurwechselassistent aktiv einen Spurwechsel vorschlägt, etwa durch Ausgabe eines Aufforderungssignals oder implizit durch Einleitung eines Beschleunigungsvorgangs, mit dem das Einfädeln in den Verkehr auf der Nebenspur vorbereitet wird. Die Spurwechselaufforderung kann dann außer von dem Gefahrenwert auch noch von anderen Kriterien abhängig sein.

Durch die EP 16 12 082 A1 und die EP 04 43 185 A2 ist darüber hinaus auch ein Spurwechselassistent bekannt, bei dem neben der Bestimmung der Bewegungsdaten des Kraftfahrzeugs auch die Umfeldbedingungen als Umwelteinflüsse berücksichtigt werden, die sich günstig oder ungünstig auf die Möglichkeiten und Fähigkeiten anderer Verkehrsteilnehmer auswirken können, angemessen auf den Spurwechsel zu reagieren.

Relevante Umwelteinflüsse sind insbesondere solche, die sich auf die Sichtverhältnisse und den Straßenzustand beziehen, beispielsweise Nebel. Der Spurwechselassistent ermöglicht es insbesondere, dem Umstand Rechnung zu tragen, dass unter solchen Bedingungen der Fahrer des nachfolgenden Fahrzeugs einen größeren Sicherheitsabstand benötigt. Ebenso ist bei ungünstigem Straßenzustand, etwa bei regennasser Fahrbahn oder Glatteis ein größer Sicherheitsabstand zum Folgefahrzeug einzuhalten.

Zur Erfassung der Umweltbedingungen ist eine Erfassungseinrichtung mit einem oder mehreren Sensoren vorgesehen, beispielsweise einem Umgebungslichtsensor, einem Regenmelder, wie er beispielsweise bereits zur Steuerung des Scheibenwischers bekannt ist, und dergleichen. Ebenso sind spezielle Sensoren oder Erfassungssysteme für Glatteis und/oder für Nebel denkbar.

Als nachteilig bei dem derart ausgestalteten Spurwechselassistent erweist es sich jedoch in der Praxis, dass die so mittels der Erfassungseinrichtung bestimmten Umweltbedingungen nicht unter allen Umständen einen fehlerfreien Rückschluss auf das Umfeld zulassen. So kann beispielsweise die Frontscheibe aufgrund einer Fahrzeugreinigung oder durch ein vorausfahrendes Fahrzeug derart benetzt sein, dass der Regensensor zwar zutreffend die Schreibenwischerfunktion aktiviert, jedoch die Schlussfolgerung, dass zugleich auch die Fahrbahn nass ist, unzutreffend ist.

Die DE 103 23 639 A1 beschreibt bereits ein Verfahren zur Erfassung eines ruhenden Objektes unter adaptiver Anpassung von Erfassungseigenschaften einer Erfassungseinrichtung. Hierzu werden beispielsweise Ultraschall- oder Radarsensoren eingesetzt. Die Erfassungsparameter, beispielsweise die Empfindlichkeitsparameter der Erfassungseinrichtung werden bei stochastisch auftretenden Erfassungssignalen, beispielsweise Störsignalen, ausgelöst durch das Bodenecho von Rollsplitt, derart angepasst, bis diese nicht mehr detektiert werden.

Außerdem beschreibt die DE 41 20 397 A1 ganz allgemein eine Einrichtung zur berührungslosen Abstandsmessung, insbesondere für Kraftfahrzeuge. Die Einrichtung ist mit zwei Ultraschallsensoren zur Messung der Laufzeit eines von einem Objekt reflektierten Ultraschallsignals ausgestattet. Daraus wird der Abstand zum Objekt errechnet, wobei zusätzlich die Laufzeit des Signals zwischen den beiden in einem vorgegebenen Abstand angeordneten Sensoren als Korrekturwert benutzt wird.

Beispiele für Spurwechselassistenten und die zugehörige Sensorik werden beschrieben in DE 40 05 444 A1, DE 35 00 152 A1, DE 296 20 357 U1, DE 43 13 568 C1, DE 195 26 452 C1, US 6 400 3 08 B1.

Der Erfindung liegt die Aufgabe zugrunde, eine Vorrichtung der genannten Art derart zu gestalten, dass unerwünschte Fehlereinflüsse nahezu ausgeschlossen sind. Insbesondere sollen die Umfeldbedingungen zuverlässig erfasst werden.

Diese Aufgabe wird erfindungsgemäß durch zumindest einen weiteren Ultraschall-Sensor zur Bestimmung der Umfeldbedingungen zeitgleich mit der Bestimmung des Abstands oder der relativen Geschwindigkeit des bewegten Objektes mittels des anderen Ultraschallsensors gelöst.

### Vorteile der Erfindung

Hierdurch wird es erstmals möglich, den weiteren Ultraschall-Sensor zur zeitgleichen Bestimmung und damit von Fehlereinflüssen weitgehend freien Messung der Umfeldbedingungen zu verwenden. Der weitere Ultraschall-Sensor dient dabei insbesondere der ständigen Überwachung der Umfeldbedingungen, so dass sehr kurze Reaktionszeiten sichergestellt werden können. Eine Zusammensetzung der Informationen aus anderweitig erfassten Informationen der Temperatur, einer Scheibenwischer-Steuerung oder eines Regensensors wird dadurch entbehrlich, so dass entsprechende Fehlereinflüsse oder Fehlinterpretationen ausgeschlossen sind. Selbstverständlich ist dabei nicht ausgeschlossen, dass die mittels des weiteren Ultraschall-Sensors erfassten Messwerte zugleich auch für zusätzliche Funktionalitäten bereitgestellt werden können, beispielsweise für einen Parkpiloten.

Eine besonders vorteilhafte Ausführungsform der vorliegenden Erfindung wird beispielsweise dadurch erreicht, dass die Vorrichtung oder der weitere Ultraschall-Sensor als integraler Bestandteil eines Kraftfahrzeuges oder eines Bauelementes des Kraftfahrzeuges ausgeführt ist. Hierdurch wird die Fertigung des derart ausgestatteten Kraftfahrzeuges wesentlich vereinfacht und zugleich die Betriebssicherheit verbessert. Zugleich ist auch eine Modulbauweise problemlos realisierbar, indem etwa als der weitere Ultraschall-Sensor ein bereits vorhandener Sensor verwendet werden kann.

Als besonders praxisnah erweist es sich zudem, wenn der weitere Ultraschall-Sensor als ein Bestandteil einer vorhandenen Ultraschallmesseinrichtung, insbesondere einer elektronischen Einparkhilfe ausgeführt ist und somit während der Fahrt für die Erfassung der Umfeldbedingungen uneingeschränkt verfügbar ist, so dass eine Überschneidung mit der Funktionalität der Einparkhilfe nicht zu befürchten ist. Während der vergleichsweise kurzen Nutzungsdauer der Einparkhilfe kann zudem auf die Erfassung der Umfeldbedingungen verzichtet werden.

Die mittels des weiteren Ultraschall-Sensors erfassten Umfeldbedingungen könnten mittels der Steuereinheit in ein Signal für den Fahrer umgesetzt werden, um diesem eine Interpretationshilfe für die Messwerte in Bezug auf das sich nähernde Fahrzeug zu bieten. Besonders vorteilhaft ist es hingegen, wenn mittels der Steuereinheit ein Schwellwert zur Auslösung des Signals aufgrund der erfassten Umfeldbedingungen automatisiert einstellbar ist. Hierdurch wird eine fehlerhafte Auswertung der erfassten Abstands- oder relativen Geschwindigkeitsmesswerte des bewegten Objektes vermieden und dadurch in einfacher Weise die Betriebssicherheit verbessert. Insbesondere wird also der Schwellwert als Empfindlichkeit entsprechend der erfassten Umfeldbedingungen schrittweise oder stufenlos verändert, bis die noch erfassten Messwerte vorbestimmte Kriterien im Hinblick auf eine Plausibilitätsprüfung erfüllen.

Weiterhin erweist es sich als besonders zweckmäßig, wenn die Vorrichtung eine Eingabeeinheit zur manuellen Änderung des mittels der Steuereinheit eingestellten Schwellwertes aufweist, um so eine Anpassung der Signalerzeugung an die individuellen Anforderungen des Fahrzeugführers zu ermöglichen. Beispielsweise können ergänzend auch verschiedene Schwellwerte auswählbar sein, die auch eine Vorauswahl entsprechend der individuellen Fahrpraxis, insbesondere für Fahranfänger gestattet.

Dabei ist es ebenso vorteilhaft, wenn aus einer Speichereinheit der Steuereinheit vorbestimmte Sensorparameter des Ultraschall-Sensors aufgrund der erfassten Umfeldbedingungen auswählbar sind,
um so die vorbestimmten Sensorparameter gleichsam als Korrekturwerte verwenden zu können, die für die jeweiligen Umfeldbedingungen aufgrund von Erfahrungswerten als sinnvoll bzw. zweckmäßig klassifiziert sind.

Hierzu ist nach einer weiteren besonders Erfolg versprechenden Ausgestaltung der Erfindung aufgrund der erfassten Umfeldbedingungen die Empfindlichkeit des Ultraschall-Sensors einstellbar, so dass unerwünschte Signale nicht erfasst werden und daher in einfacher Weise die Anpassung an die Umfeldbedingungen unabhängig von der Signalverarbeitung erfolgt.

Eine andere besonders praxisrelevante Ausgestaltung der vorliegenden Erfindung wird dadurch erreicht, dass der Ultraschall-Sensor einen sich seitlich und/oder hinter dem Kraftfahrzeug erstreckenden Erfassungsbereich aufweist. Der hintere Ultraschall-Sensor befindet sich im Heck des Fahrzeuges mit einer Blickrichtung von 45° nach hinten. Der vordere Sensor hat eine Ausrichtung zur Seite. Der hintere Sensor erkennt Objekte im toten Winkel. Der vordere plausibilisiert über die Zeit und Fahrdistanz Objekte wie Leitplanken und den entgegenkommenden Verkehr und unterdrückt so ein Warnsignal.

Dementsprechend dienen je nach Einsatzzweck Mittel zur Erzeugung eines optischen und/oder akustischen Warnsignals, um so einerseits die Aufmerksamkeit des Fahrzeugführers zu erregen, andererseits eine Ablenkung vom Fahrgeschehen, die damit zu einer insgesamt verschlechterten Fahrsicherheit führen könnte, zu vermeiden.

Der Begriff Umfeldbedingungen soll dabei beispielsweise die Temperatur, die Feuchtigkeit oder auch Regen umfassen, die jeweils unterschiedliche Einflüsse auf die Ultraschallsensoren haben. So ist zum Beispiel die Dämpfung der Amplitude (Stärke) eines Schallimpulses Temperatur- und Feuchtigkeitsabhängig. Durch die Auswertung und den Vergleich des reflektierten Echos des Bodens ist es möglich, die herrschende Dämpfung zu schätzen und auf das Temperatur-Feuchtigkeits-Verhältnis zu schließen.

Zusätzlich zu der Dämpfung der Amplitude, überlagert sich beim Regen aufgrund der nassen Straße das erhöhte Rollgeräusch auf das Grundrauschen. So dass das gesamte Rauschniveau für den Sensor höher erscheint.

Solche Einflussfaktoren und erfassten Begleitumstände können sinnvollerweise in die Signalerstellung einfließen.

Für die Schätzung des Umfeldrauschens können die weiteren Ultraschall-Sensoren in einen "Passiv-Modus" geschaltet werden. In diesem Modus senden die Ultraschall-Sensoren keine Schallwellen; somit wird nur Fremdrauschen aus dem Umfeld erfasst. Durch einen zeitabhängigen Schwellwert ist der Zeitpunkt, an den der Schwellwert überschritten wird, proportional zu der Rauschamplitude. Diese Aufgabe können beispielsweise die vorderen seitlichen Sensoren einer Totenwinkelüberwachung erledigen. Denn diese sind während der Totenwinkelüberwachung für die Situations-Interpretation immer aktiv. Diese Sensoren werden für die Schätzung der Rauschamplitude für einige Zyklen im Passiv-Modus betrieben.

### Zeichnung

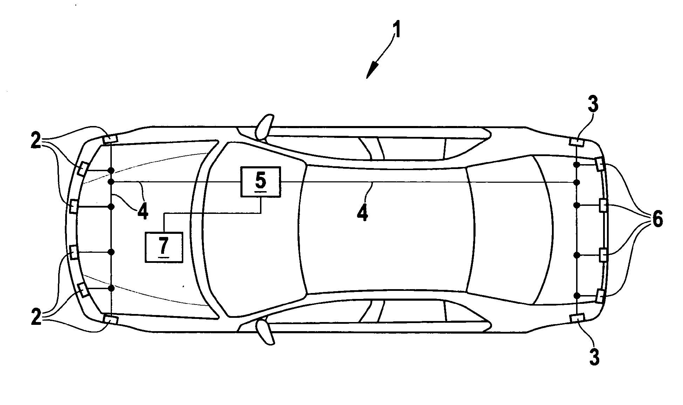

Ein Ausführungsbeispiel der Erfindung ist in der Zeichnung schematisiert dargestellt und wird nachfolgend näher beschrieben. Diese zeigt in einer Draufsicht ein Kraftfahrzeug zur Erläuterung der Funktionsweise der erfindungsgemäßen Vorrichtung.

### Beschreibung des Ausführungsbeispiels

In der Figur ist ein Kraftfahrzeug 1 dargestellt, welches mit einer erfindungsgemäßen Vorrichtung zur Erfassung eines nicht dargestellten, sich nähernden Fahrzeuges ausgestattet ist. Die Vorrichtung hat mehrere im Frontbereich sowie im Heckbereich angeordnete Ultraschall-Sensoren 2, 3, die mittels Kopplungseinrichtungen 4 mit einer Steuereinheit 5 zur Bestimmung des Abstands und der relativen Geschwindigkeit des sich nähernden Fahrzeuges verbunden sind. Die Vorrichtung ist weiterhin mit mehreren weiteren, einem Parkassistenzsystem zugeordneten Ultraschall-Sensoren 6 zur Bestimmung der Umfeldbedingungen verbunden, die dadurch deren Erfassung zeitgleich mit der Bestimmung des Abstands und der relativen Geschwindigkeit des sich nähernden Fahrzeuges mittels der anderen Ultraschallsensoren 2, 3 gestattet. Auf diese Weise können dem mittels einer Ausgabeeinheit 7 bedarfsweise auslösbaren Warnsignal für den Kraftfahrzeugführer die erfassten, relevanten Umfeldbedingungen als Korrekturwert zugrunde gelegt werden, um so fehlerhafte Signale zu vermeiden.

## Patentansprüche

1. Vorrichtung für ein Kraftfahrzeug mit zumindest einem Ultraschall-Sensor (2, 3) zur Erfassung eines bewegten Objektes, insbesondere eines sich nähernden Fahrzeugs, und mit einer Steuereinheit (5) zur Bestimmung des Abstands und/oder der relevanten Geschwindigkeit des Objekts als Messwert einerseits und der hinsichtlich der Messwerterfassung relevanten Umfeldbedingung andererseits, wobei relevante Umfeldbedingungen solche sind, die sich auf die Sichtverhältnisse, den Straßenzustand, die Temperatur, die Feuchtigkeit oder den Regen beziehen, sowie mit einer Ausgabeeinheit (7) zur bedarfsweisen Auslösung eines Signals aufgrund der so ermittelten Messwerte **gekennzeichnet durch** zumindest einen weiteren Ultraschallsensor (6) zur Bestimmung der Umfeldbedingungen zeitgleich mit der Bestimmung des Abstandes oder der relativen Geschwindigkeit des bewegten Objektes mittels des anderen Ultraschall-Sensors (2, 3).

2. Vorrichtung nach Anspruch 1, **dadurch gekennzeichnet, dass** die Vorrichtung und/oder der weitere Ultraschall-Sensor (6) als integraler Bestandteil eines Kraftfahrzeuges (1) oder eines Bauelementes des Kraftfahrzeuges (1) ausgeführt ist.

3. Vorrichtung nach Anspruch 1 oder 2, **dadurch gekennzeichnet, dass** der weitere Ultraschall-Sensor (6) als ein Bestandteil einer vorhandenen Ultraschallmesseinrichtung, insbesondere einer elektronischen Einparkhilfe ausgeführt ist.

4. Vorrichtung nach einem der vorhergehenden Ansprüche, **dadurch gekennzeichnet, dass** mittels der Steuereinheit (5) ein Schwellwert zur Auslösung des Signals aufgrund der erfassten Umfeldbedingungen automatisiert einstellbar ist

5. Vorrichtung nach einem der vorhergehenden Ansprüche, **dadurch gekennzeichnet, dass** die Vorrichtung eine Eingabeeinheit zur manuellen Änderung des mittels der Steuereinheit (5) eingestellten Schwellwertes aufweist.

6. Vorrichtung nach einem der vorhergehenden Ansprüche, **dadurch gekennzeichnet, dass** aus einer Speichereinheit der Steuereinheit (5) vorbestimmte Sensorparameter des Ultraschall-Sensors (2, 3) aufgrund der erfassten Umfeldbedingungen auswählbar sind.

7. Vorrichtung nach einem der vorhergehenden Ansprüche, **dadurch gekennzeichnet, dass** aufgrund der erfassten Umfeldbedingungen die Empfindlichkeit des Ultraschall-Sensors (2, 3) einstellbar ist.

8. Vorrichtung nach einem der vorhergehenden Ansprüche, **dadurch gekennzeichnet, dass** der Ultraschall-Sensor (2, 6) einen sich seitlich und/oder hinter dem Kraftfahrzeug erstreckenden Erfassungsbereich aufweist.

9. Vorrichtung nach einem der vorhergehenden Ansprüche, **dadurch gekennzeichnet, dass** die Vorrichtung Mittel zur Erzeugung eines optischen und/oder akustischen Warnsignals aufweist.

10. Vorrichtung nach einem der vorhergehenden Ansprüche, **dadurch gekennzeichnet, dass** die Vorrichtung zur Erfassung eines bewegten Objektes ausgeführt ist.

## Claims

1. Device for a motor vehicle having at least one ultrasonic sound sensor (2, 3) for detecting a moving object, in particular an approaching vehicle, and having a control unit (5) for determining the distance and/or the relative speed of the object as a measured value, on the one hand, and the environmental condition which is relevant for the detection of the measured values wherein relevant environmental conditions are those which relate to the visibility conditions, the state of the road, the temperature, the humidity or the rain, and having an output unit (7) for triggering a signal as required on the basis of the measured values which are determined in this way, **characterized by** at least one further ultrasonic sound sensor (6) for determining the environmental conditions at the same time as determining the distance or the relative speed of the moving object by means of the other ultrasonic sound sensor (2, 3).

2. Device according to Claim 1, **characterized in that** the device and/or the further ultrasonic sound sensor (6) are embodied as integral components of a motor vehicle (1) or of an assembly of the motor vehicle (1).

3. Device according to Claim 1 or 2, **characterized in that** the further ultrasonic sound sensor (6) is embodied as a component of an existing ultrasonic sound measuring device, in particular of an electronic parking aid.

4. Device according to one of the preceding claims, **characterized in that** a threshold value for triggering the signal on the basis of the detected environmental conditions can be set in an automated fashion by means of the control unit (5).

5. Device according to one of the preceding claims, **characterized in that** the device has an input unit for manually changing the threshold value which is set by means of the control unit (5).

6. Device according to one of the preceding claims, **characterized in that** a predetermined sensor parameter of the ultrasonic sound sensor (2, 3) can be selected from a memory unit of the control unit (5) on the basis of the detected environmental conditions.

7. Device according to one of the preceding claims, **characterized in that** the sensitivity of the ultrasonic sound sensor (2, 3) can be set on the basis of the detected environmental conditions.

8. Device according to one of the preceding claims, **characterized in that** the ultrasonic sound sensor (2, 6) has a detection range which extends laterally and/or behind the motor vehicle.

9. Device according to one of the preceding claims, **characterized in that** the device has means for generating an optical and/or acoustic warning signal.

10. Device according to one of the preceding claims, **characterized in that** the device is designed to detect a moving object.

## Revendications

1. Dispositif pour véhicule, présentant au moins un détecteur à ultrasons (2, 3) qui détecte un objet en déplacement, en particulier un véhicule qui s'approche, une unité de commande (5) qui détermine la distance et/ou la vitesse relative de l'objet en tant que valeur de mesure, d'une part, et des conditions ambiantes relatives à la saisie de la valeur de mesure, d'autre part, les conditions ambiantes relatives étant celles qui concernent les conditions de visibilité, l'état de la chaussée, la température, l'humidité ou la pluie, ainsi qu'une unité d'émission (7) qui déclenche en cas de besoin un signal sur la base des valeurs de mesure ainsi déterminées, **caractérisé par** au moins un autre détecteur à ultrasons (6) qui détermine les conditions ambiantes en même temps que la détermination de la distance ou de la vitesse relative de l'objet en déplacement au moyen de l'autre détecteur à ultrasons (2, 3).

2. Dispositif selon la revendication 1, **caractérisé en ce que** le dispositif et/ou l'autre détecteur à ultrasons (6) font partie intégrante d'un véhicule automobile (1) ou d'un composant du véhicule automobile (1).

3. Dispositif selon la revendication 1 ou 2, **caractérisé en ce que** l'autre détecteur à ultrasons (6) fait partie intégrante d'un dispositif prévu pour la mesure par ultrasons, en particulier une assistance électronique au stationnement.

4. Dispositif selon l'une des revendications précédentes, **caractérisé en ce qu'**une valeur de seuil qui déclenche le signal sur la base des conditions d'environnement détectées peut être réglée automatiquement au moyen de l'unité de commande (5).

5. Dispositif selon l'une des revendications précédentes, **caractérisé en ce que** le dispositif présente une unité d'introduction qui permet de modifier manuellement la valeur de seuil réglée au moyen de l'unité de commande (5).

6. Dispositif selon l'une des revendications précédentes, **caractérisé en ce que** des paramètres prédéterminés du détecteur à ultrasons (2, 3) peuvent être sélectionnés dans une unité de mémoire de l'unité de commande (5) en fonction des conditions ambiantes qui sont détectées.

7. Dispositif selon l'une des revendications précédentes, **caractérisé en ce que** la sensibilité du détecteur à ultrasons (2, 3) peut être réglée en fonction des conditions ambiantes qui ont été détectées.

8. Dispositif selon l'une des revendications précédentes, **caractérisé en ce que** la portée de détection du détecteur à ultrasons (2, 6) s'étend latéralement et/ou en arrière du véhicule automobile.

9. Dispositif selon l'une des revendications précédentes, **caractérisé en ce que** le dispositif présente des moyens de génération d'un signal optique et/ou acoustique d'avertissement.

10. Dispositif selon l'une des revendications précédentes, **caractérisé en ce que** le dispositif est réalisé de manière à détecter un objet en déplacement.
